# EUROPEAN PATENT APPLICATION

(11) **EP 3 730 113 A1**
(43) Date of publication of application: **28.10.2020**
(21) Application number: 19170721.5
(22) Date of filing: 23.04.2019
(51) Int. Cl.: A61G 5/02, A61G 5/10, B60B 33/00

(54) **ANTI-TIP WHEELCHAIR**

(71) Applicant: Invacare International GmbH, 4108 Witterswil (CH)
(72) Inventor: ROBERT, Maël, 37360 Semblançay (FR)
(74) Representative: Noll, Ronald

(57) **Abstract**

There is described a wheelchair (1) comprising a wheelchair frame (10), a pair of drive wheels (20) configured to contact a ground surface (S) when the wheelchair (1) is in use, each drive wheel rotating about an axis of rotation (RA), at least one front wheel (30) mounted to a front-end portion (10A) of the wheelchair frame, and an anti-tip assembly (50) mounted to a rear-end portion (10B) of the wheelchair frame, which anti-tip assembly includes at least one pivot arm (51) that is supported onto the rear-end portion of the wheelchair frame so as to be pivotable with respect to the wheelchair frame about a pivot axis (PA). The pivot arm includes a drive wheel attachment point (520) coinciding with the axis of rotation and providing attachment of at least one of the drive wheels and a wheelchair frame attachment point (510) coinciding with the pivot axis and providing attachment of the pivot arm to the rear-end portion of the wheelchair frame. The anti-tip assembly further comprises a rear wheel (55) that is provided at a distal end (51A) of the pivot arm, rearward of the drive wheels, and that is configured to contact the ground surface when the wheelchair is in use. The anti-tip assembly is configured to allow the wheelchair frame to tilt backwards into a predetermined stable titled position with the at least one front wheel in a raised position above the ground surface, while the drive wheels and the rear wheel remain in contact with the ground surface. In one embodiment, the pivot arm is attached, via the wheelchair frame attachment point, to a bracket (100) of the wheelchair frame, which bracket is provided with an arcuate opening (100A) configured to allow passage of a drive wheel axis (25) of the drive wheel, which drive wheel axis is coupled to the pivot arm, via the drive wheel attachment point, the arcuate opening defining a predetermined range of pivoting movement of the pivot arm with respect to the wheelchair frame.

## Description

### TECHNICAL FIELD

The present invention generally relates to a wheelchair of the type comprising an anti-tip assembly intended to increase maneuverability while preventing the wheelchair from tipping backwards.

### BACKGROUND OF THE INVENTION

Anti-tip wheelchairs are known as such in the art.

US Patent No. US 7,694,990 B2, which is incorporated herein by reference in its entirety, discloses an anti-tip wheelchair comprising a wheelchair frame, a pair of drive wheels configured to contact a ground surface when the wheelchair is in use, each drive wheel rotating about an axis of rotation, at least one front wheel mounted to a front-end portion of the wheelchair frame, and an anti-tip assembly mounted to a rear-end portion of the wheelchair frame, which anti-tip assembly includes at least one pivot arm that is supported onto the rear-end portion of the wheelchair frame so as to be pivotable with respect to the wheelchair frame about a pivot axis. The pivot arm includes a drive wheel attachment point configured to provide attachment of at least one of the drive wheels, which drive wheel attachment point coincides with the axis of rotation of the drive wheel, and a wheelchair frame attachment point configured to provide attachment of the pivot arm to the rear-end portion of the wheelchair frame, which wheelchair frame attachment point coincides with the pivot axis of the pivot arm. A rear wheel is further provided at a distal end of the pivot arm, rearward of the drive wheels, which rear wheel is configured to contact the ground surface when the wheelchair is in use. A stop device is further mounted on the pivot arm or the wheelchair frame to limit pivoting movement of the pivot arm with respect to the wheelchair frame. The anti-tip assembly is configured to allow the wheelchair frame to tilt backwards into a predetermined stable titled position with the at least one front wheel in a raised position above the ground surface, while the drive wheels and the rear wheel remain in contact with the ground surface.

US Patent No. US 7,694,990 B2 further discloses a drive wheel lock assembly mounted on the front-end portion of the wheelchair frame, on both sides of the wheelchair frame, and configured to apply a wheel lock to each of the drive wheels. In one embodiment, the drive wheel lock assembly includes a wheel engaging element (e.g. a brake shoe) mounted on the front of the wheelchair frame, which wheel engaging element is configured to be selectively engageable with a portion of the outer circumference of the drive wheel. Application of the wheel lock is achieved by selective actuation of a user-operable handle that is mechanically coupled to the wheel engaging element via an articulated linkage. In another embodiment, the user-operable handle is mechanically coupled to the wheel engaging element via a cable. In both embodiments, the wheel engaging element is mounted on the wheelchair frame frontward of the drive wheel and below the axis of rotation of the drive wheel in order to provide increased locking force to the drive wheel upon tilting the wheelchair backwards and prevent inadvertent release of the wheel lock.

According to US Patent No. US 7,694,990 B2, a tilt prevention device may optionally be mounted on the wheelchair frame, pivot arm or another portion of the wheelchair to prevent any pivoting movement of the pivot arm with respect to the wheelchair frame, and thereby prevent any tilting movement of the wheelchair. No particular embodiment of such a tilt prevention device is however specifically disclosed in US Patent No. US 7,694,990 B2.

US Patent No. US 6,530,598 B1 discloses another type of anti-tip wheelchair, which differs from the anti-tip wheelchair of US Patent No. US 7,694,990 B2 in that the drive wheels are supported directly onto the wheelchair frame, and not on the anti-tip assembly, and in that the rear wheel provided at the distal end of the pivot arm only comes into contact with the ground surface upon tilting the wheelchair backwards, which is less desirable from the point of view of wheelchair stability and maneuverability. The anti-tip wheelchair of US Patent No. US 7,694,990 B2 therefore remains a more adequate solution from a practical perspective.

This being said further improvements of the anti-tip wheelchair concept disclosed in US Patent No. US 7,694,990 B2 are desirable in order to make it more robust and easier to operate and handle for the user.

### SUMMARY OF THE INVENTION

A general aim of the invention is to provide an improved anti-tip wheelchair of the type disclosed in US Patent No. US 7,694,990 B2.

Yet another aim of the invention is to provide such a wheelchair having an anti-tip assembly of simpler and more robust and reliable construction.

A further aim of the invention is to provide such a wheelchair where a range of pivoting movement of the pivot arm can be selectively limited by the user.

Still another aim of the invention is to provide such a wheelchair which ensures a correct positioning of the rear wheel that is provided at the distal end of the pivot arm with respect to the ground surface with which it is designed to come into contact.

A further aim of the invention is to provide such a wheelchair which includes a more robust drive wheel lock assembly to apply a wheel lock to at least one of the drive wheels.

These aims are achieved thanks to the solutions defined in the claims.

In accordance with a first aspect of the invention, there is provided a wheelchair as defined in claim 1, namely a wheelchair comprising a wheelchair frame, a pair of drive wheels configured to contact a ground surface when the wheelchair is in use, each drive wheel rotating about an axis of rotation, at least one front wheel mounted to a front-end portion of the wheelchair frame, and an anti-tip assembly mounted to a rear-end portion of the wheelchair frame, which anti-tip assembly includes at least one pivot arm that is supported onto the rear-end portion of the wheelchair frame so as to be pivotable with respect to the wheelchair frame about a pivot axis. The pivot arm includes a drive wheel attachment point configured to provide attachment of at least one of the drive wheels, which drive wheel attachment point coincides with the axis of rotation of the drive wheel, and a wheelchair frame attachment point configured to provide attachment of the pivot arm to the rear-end portion of the wheelchair frame, which wheelchair frame attachment point coincides with the pivot axis of the pivot arm. The anti-tip assembly further comprises a rear wheel that is provided at a distal end of the pivot arm, rearward of the drive wheels, which rear wheel is configured to contact the ground surface when the wheelchair is in use. The anti-tip assembly is configured to allow the wheelchair frame to tilt backwards into a predetermined stable titled position with the at least one front wheel in a raised position above the ground surface, while the drive wheels and the rear wheel remain in contact with the ground surface. According to this first aspect of the invention, the pivot arm is attached, via the wheelchair frame attachment point, to a bracket of the wheelchair frame, which bracket is provided with an arcuate opening configured to allow passage of a drive wheel axis of the drive wheel. The drive wheel axis is coupled to the pivot arm, via the drive wheel attachment point, the arcuate opening defining a predetermined range of pivoting movement of the pivot arm with respect to the wheelchair frame.

By way of preference, a front portion of the pivot arm, which is coupled to the bracket and to the drive wheel, is configured as a fork member laterally surrounding the bracket.

According to a preferred variant of the wheelchair, the anti-tip assembly further comprises a tilt angle limiting device that is configured to take a first position in which the pivot arm is allowed to pivot with respect to the wheelchair frame over the predetermined range of pivoting movement and at least a second position in which the pivot arm is not allowed to pivot with respect to the wheelchair frame over the full predetermined range of pivoting movement.

The provision of this tilt angle limiting device constitutes a second aspect of the present invention, which is applicable independently of the first aspect of the invention. In that regard, in accordance with a second aspect of the invention, there is provided a wheelchair as defined in independent claim 4, namely a wheelchair comprising a wheelchair frame, a pair of drive wheels configured to contact a ground surface when the wheelchair is in use, each drive wheel rotating about an axis of rotation, at least one front wheel mounted to a front-end portion of the wheelchair frame, and an anti-tip assembly mounted to a rear-end portion of the wheelchair frame, which anti-tip assembly includes at least one pivot arm that is supported onto the rear-end portion of the wheelchair frame so as to be pivotable with respect to the wheelchair frame about a pivot axis. The pivot arm includes a drive wheel attachment point configured to provide attachment of at least one of the drive wheels, which drive wheel attachment point coincides with the axis of rotation of the drive wheel, and a wheelchair frame attachment point configured to provide attachment of the pivot arm to the rear-end portion of the wheelchair frame, which wheelchair frame attachment point coincides with the pivot axis of the pivot arm. The anti-tip assembly further comprises a rear wheel that is provided at a distal end of the pivot arm, rearward of the drive wheels, which rear wheel is configured to contact the ground surface when the wheelchair is in use. The anti-tip assembly is configured to allow the wheelchair frame to tilt backwards into a predetermined stable titled position with the at least one front wheel in a raised position above the ground surface, while the drive wheels and the rear wheel remain in contact with the ground surface. According to this second aspect of the invention, the anti-tip assembly further comprises a tilt angle limiting device that is configured to take a first position in which the pivot arm is allowed to pivot with respect to the wheelchair frame over a predetermined range of pivoting movement and at least a second position in which the pivot arm is not allowed to pivot with respect to the wheelchair frame over the full predetermined range of pivoting movement.

The aforementioned tilt angle limiting device preferably comprises a lever mounted onto the pivot arm and adapted to pivot with respect to the pivot arm between the first and second positions. In this context, the lever may in particular comprise a portion configured to limit pivoting movement of the pivot arm with respect to the wheelchair frame when the lever is pivoted to the second position.

According to a variant of the aforementioned wheelchairs, a position of a swivel member of the rear wheel with respect to the pivot arm is adjustable so that a swivel axis of the swivel member can be adjusted to be substantially perpendicular to the ground surface.

This adjustability of the swivel member of the rear wheel constitutes another aspect of the present invention, which is applicable independently of the first and second aspects of the invention. In that regard, in accordance with a third aspect of the invention, there is provided a wheelchair as defined in independent claim 8, namely a wheelchair comprising a wheelchair frame, a pair of drive wheels configured to contact a ground surface when the wheelchair is in use, each drive wheel rotating about an axis of rotation, at least one front wheel mounted to a front-end portion of the wheelchair frame, and an anti-tip assembly mounted to a rear-end portion of the wheelchair frame, which anti-tip assembly includes at least one pivot arm that is supported onto the rear-end portion of the wheelchair frame so as to be pivotable with respect to the wheelchair frame about a pivot axis. The pivot arm includes a drive wheel attachment point configured to provide attachment of at least one of the drive wheels, which drive wheel attachment point coincides with the axis of rotation of the drive wheel, and a wheelchair frame attachment point configured to provide attachment of the pivot arm to the rear-end portion of the wheelchair frame, which wheelchair frame attachment point coincides with the pivot axis of the pivot arm. The anti-tip assembly further comprises a rear wheel that is provided at a distal end of the pivot arm, rearward of the drive wheels, which rear wheel is configured to contact the ground surface when the wheelchair is in use. The anti-tip assembly is configured to allow the wheelchair frame to tilt backwards into a predetermined stable titled position with the at least one front wheel in a raised position above the ground surface, while the drive wheels and the rear wheel remain in contact with the ground surface. According to this third aspect of the invention, a position of a swivel member of the rear wheel with respect to the pivot arm is adjustable so that a swivel axis of the swivel member can be adjusted to be substantially perpendicular to the ground surface.

By way of preference, the swivel member is repositionable with respect to the pivot arm by translation along the swivel axis. In this context, the swivel member may in particular be held onto the pivot arm by means of a releasable clamping element.

According to yet another variant of the aforementioned wheelchairs, the anti-tip assembly further comprises at least one drive wheel lock assembly configured to apply a wheel lock to at least one of the drive wheels, which drive wheel lock assembly comprises a wheel engaging element that is mounted on the pivot arm and configured to be selectively engageable with the drive wheel rearward of the drive wheel.

This drive wheel lock assembly constitutes yet another aspect of the present invention, which is applicable independently of the first to third aspects of the invention. In that regard, in accordance with a fourth aspect of the invention, there is provided a wheelchair as defined in independent claim 12, namely a wheelchair comprising a wheelchair frame, a pair of drive wheels configured to contact a ground surface when the wheelchair is in use, each drive wheel rotating about an axis of rotation, at least one front wheel mounted to a front-end portion of the wheelchair frame, and an anti-tip assembly mounted to a rear-end portion of the wheelchair frame, which anti-tip assembly includes at least one pivot arm that is supported onto the rear-end portion of the wheelchair frame so as to be pivotable with respect to the wheelchair frame about a pivot axis. The pivot arm includes a drive wheel attachment point configured to provide attachment of at least one of the drive wheels, which drive wheel attachment point coincides with the axis of rotation of the drive wheel, and a wheelchair frame attachment point configured to provide attachment of the pivot arm to the rear-end portion of the wheelchair frame, which wheelchair frame attachment point coincides with the pivot axis of the pivot arm. The anti-tip assembly further comprises a rear wheel that is provided at a distal end of the pivot arm, rearward of the drive wheels, which rear wheel is configured to contact the ground surface when the wheelchair is in use. The anti-tip assembly is configured to allow the wheelchair frame to tilt backwards into a predetermined stable titled position with the at least one front wheel in a raised position above the ground surface, while the drive wheels and the rear wheel remain in contact with the ground surface. According to this fourth aspect of the invention, the anti-tip assembly further comprises at least one drive wheel lock assembly configured to apply a wheel lock to at least one of the drive wheels, which drive wheel lock assembly comprises a wheel engaging element that is mounted on the pivot arm and configured to be selectively engageable with the drive wheel rearward of the drive wheel.

By way of preference, the drive wheel lock assembly is a cable-operated drive wheel lock assembly comprising a user-operable handle coupled to the wheel engaging element via a cable, and the wheel engaging element may be configured to pivot with respect to the pivot arm upon being operated. In this context, a position of the wheel engaging element along the pivot arm may advantageously be adjustable. In this latter context, the pivot arm may in particular be provided with a mounting groove extending longitudinally along a lateral side of the pivot arm, the wheel engaging element being releasably mounted in the mounting groove and repositionable along the mounting groove. The mounting groove may further be exploited so that part of the cable is guide inside a portion of the mounting groove.

Further advantageous embodiments of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a schematic side view of a wheelchair comprising an anti-tip assembly in accordance with a preferred embodiment of the invention ;
Figure 1A is a schematic side view of the wheelchair of Figure 1 where the drive wheels have been omitted to reveal the structure of the anti-tip assembly;
Figure 1B is a schematic side view of the wheelchair of Figure 1 upon being titled backwards to a predetermined stable tilted position ;
Figure 2 is a partial perspective view of a distal end of a pivot arm of the anti-tip assembly of the wheelchair of Figure 1 showing a rear wheel and wheel engaging element of the anti-tip assembly;
Figure 3A is a partial perspective view of a front-end section of a cable-operated drive wheel lock assembly for operating the wheel engaging element of Figure 2;
Figure 3B is a partial perspective view of a rear-end section of the cable-operated drive wheel lock assembly for operating the wheel engaging element of Figure 2;
Figure 4 is a partial perspective view of the anti-tip assembly of the wheelchair of Figure 1 as seen from an interior side of the wheelchair, including a pivot arm that is pivotably supported onto a rear-end portion of the wheelchair frame;
Figure 5A is a partial perspective view of a front section of the anti-tip assembly shown in Figure 4 where the pivot arm is pivotably supported onto the rear-end portion of the wheelchair frame, via a wheelchair frame attachment point, and where a drive wheel is attached to the pivot arm, via a drive wheel attachment point;
Figure 5B is a partial perspective view of the same front section of the anti-tip assembly as shown in Figure 5A where a front portion of the pivot arm is shown in transparency to reveal the underlying structure of a bracket to which the pivot arm is pivotably attached;
Figure 5C is a partial perspective view of the same front section of the anti-tip assembly as shown in Figure 5B, the front portion of the pivot arm being likewise shown in transparency, with the difference that the pivot arm is shown pivoted to an extreme position with respect to the bracket; and
Figure 5D is a partial perspective view of the same front section of the anti-tip assembly as shown in Figures 5A and 5B, where a tilt limiting device of the anti-tip assembly has been moved to an active position to limit pivoting movement of the pivot arm.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein.

As described herein, when two or more parts or components are described as being connected, secured or coupled to one another, they can be so connected, secured or coupled directly to each other or through one or more intermediary parts.

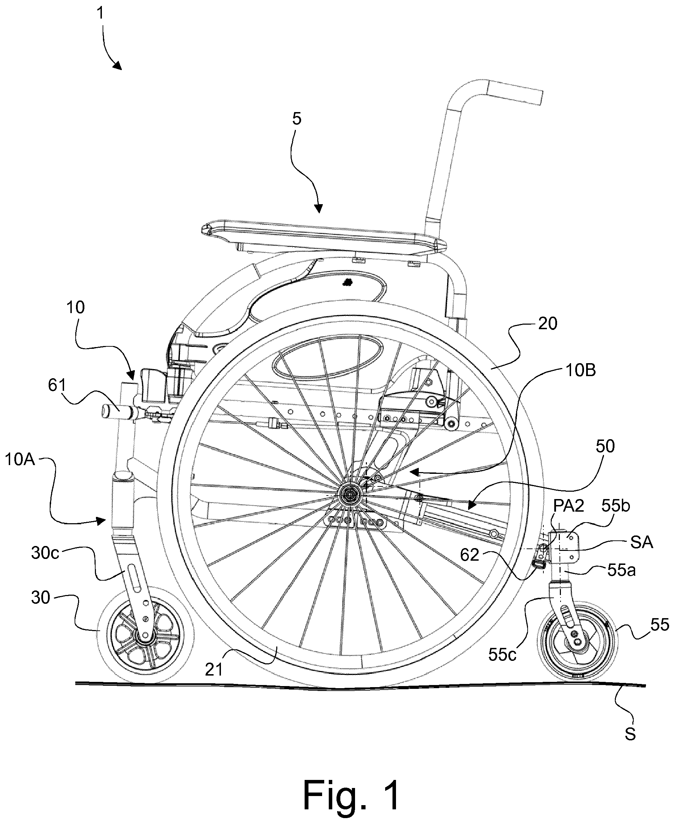

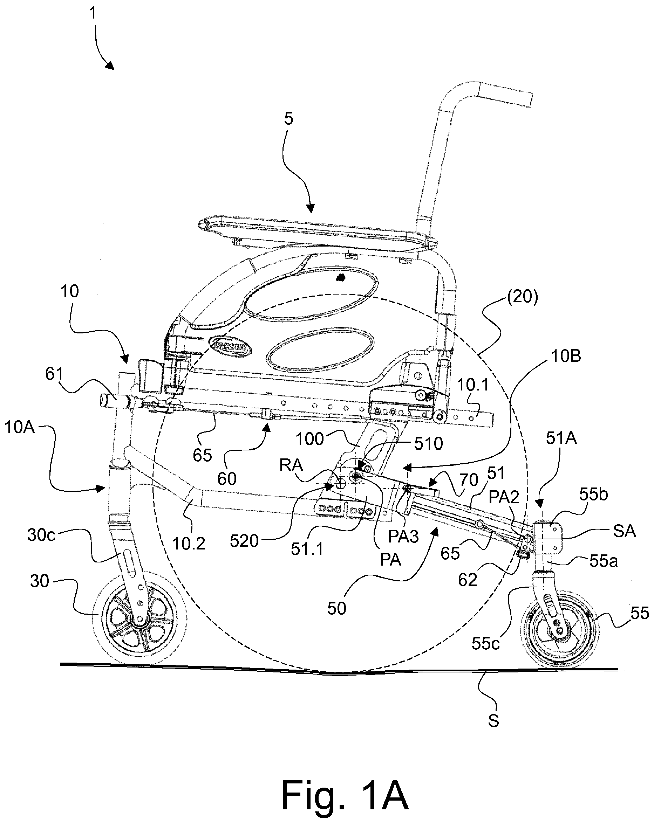

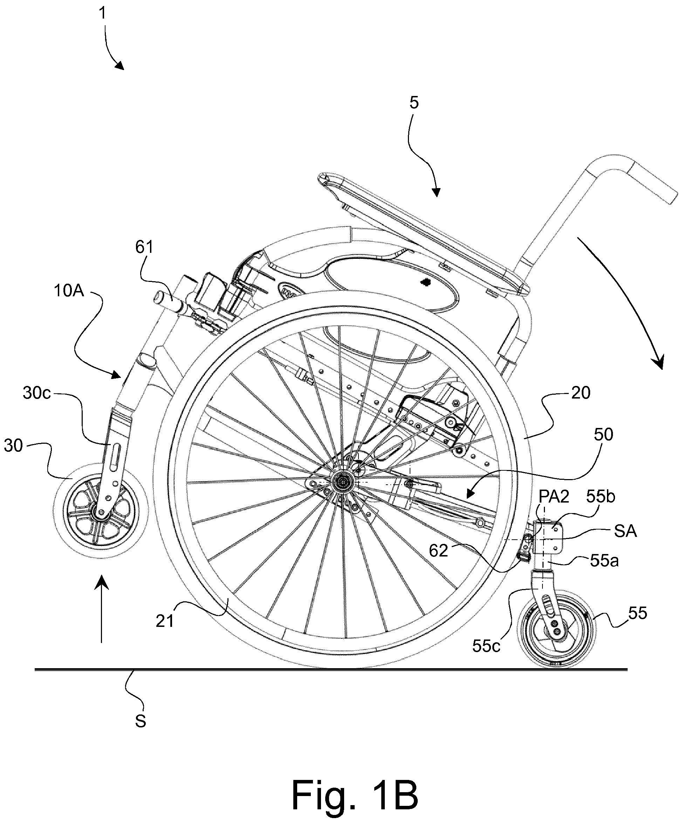

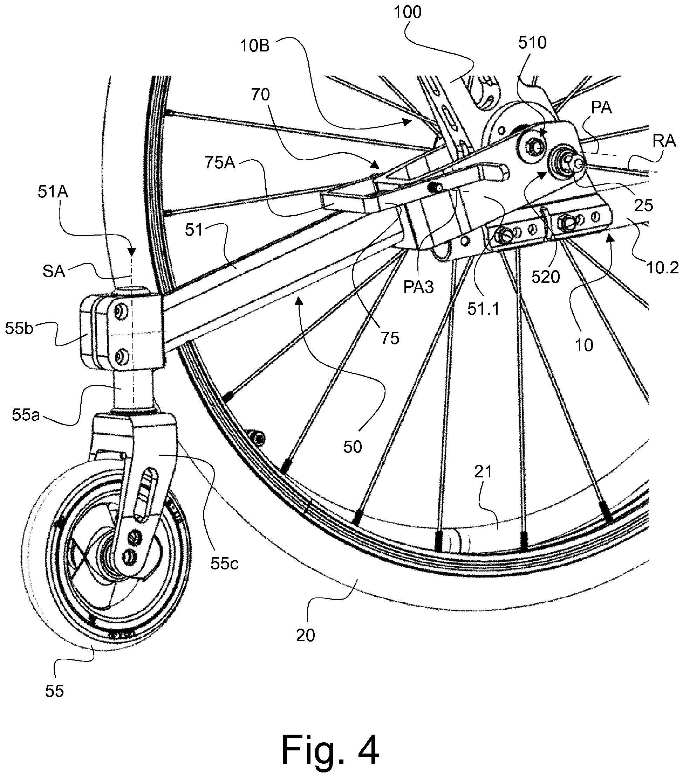

The invention will be described in relation to various embodiments of an anti-tip wheelchair as shown in Figures 1 to 5A-D.

Figure 1 is a schematic side view of a wheelchair, designated generally by reference numeral 1, in accordance with a preferred embodiment of the invention. The wheelchair 1 comprises a wheelchair frame 10 supporting a seat portion 5 and a pair of drive wheels 20 configured to contact a ground surface S when the wheelchair 1 is in use, as shown in Figure 1. In the illustrated example, each drive wheel 20 includes a hand rim 21 allowing the user to wheel the wheelchair 1. At least one front wheel 30 is mounted to a front-end portion 10A of the wheelchair frame 10. In the illustrated example a pair of front wheels 30 is provided at the front-end portion 10A of the wheelchair frame 10 on either side. The front wheels 30 are designed as pivotable caster wheels, as is known in the art, each front wheel 30 being carried by a corresponding fork element 30c configured to be pivotable about a substantially vertical swivel axis.

The wheelchair 1 further comprises an anti-tip assembly 50 mounted to a rear-end portion 10B of the wheelchair frame 10, the general configuration of which is similar to the anti-tip assembly taught in US Patent No. US 7,694,990 B2, but incorporates a number of improvements.

Figure 1A is a schematic side view of the wheelchair 1 of Figure 1 where the drive wheels 20 have been omitted to reveal the structure of the anti-tip assembly 50. As shown in Figure 1A, the anti-tip assembly 50 includes at least one pivot arm 51 that is supported on the rear-end portion 10B of the wheelchair frame 10 so as to be pivotable with respect to the wheelchair frame 10 about a pivot axis PA. A single pivot arm could be provided. In the illustrated example, the anti-tip assembly 50 comprises a pair of pivot arms 51 located on the left-hand and right-hand sides of the wheelchair 1 next to and inward from the drive wheels 20. More specifically, each pivot arm 51 is pivotably supported, at a front portion 51.1, onto a bracket 100 of the wheelchair frame 10, which bracket 100 is here secured between upper and lower longitudinal frame members 10.1, 10.2.

Each pivot arm 51 includes a drive wheel attachment point 520 configured to provide attachment of a respective one of the drive wheels 20, which drive wheel attachment point 520 coincides with an axis of rotation RA of the drive wheel 20. Each pivot arm 51 further includes a wheelchair frame attachment point 510 configured to provide attachment of the pivot arm 51 to the rear-end portion 10B of the wheelchair frame 10, namely to a corresponding portion of the bracket 100. The wheelchair frame attachment point 510 coincides with the pivot axis PA of the pivot arm 51.

The anti-tip assembly 50 further comprises a rear wheel 55 that is provided at a distal end 51A of the pivot arm 51, rearward of the drive wheels 20, which rear wheel 55 is configured to contact the ground surface S when the wheelchair 1 is in use as shown in Figures 1 and 1A. The rear wheel 55 is designed as a pivotable caster wheel, much like the front wheels 30, and is likewise carried by a fork element 55c configured to pivot about a swivel axis SA. Reference sign 55a in Figures 1 and 1A designates a swivel member to which the fork element 55c is pivotably attached, while reference sign 55b designates a clamping element configured to hold the swivel member 55a at the distal end 51A of the pivot arm 51.

In the illustrated embodiment, one will appreciate that the wheelchair 1 includes a total of six wheels, namely two drive wheels 20, two front wheels 30 and two rear wheels 55.

In a manner similar to the known anti-tip assembly disclosed in US Patent No. US 7,694,990 B2, the anti-tip assembly 50 is configured to allow the wheelchair frame 10 to tilt backwards into a predetermined stable tilted position, as illustrated in Figure 1B, with the front wheels 30 in a raised position above the ground surface S, while the drive wheels 20 and the rear wheels 55 remain in contact with the ground surface S, allowing the user e.g. to climb over curbs or the like. One major advantage of the wheelchair concept of the present invention, like the wheelchair concept of US Patent No. US 7,694,990 B2, resides in the improved stability and maneuverability, as well as the guarantee that the wheelchair 1 cannot inadvertently tip backwards beyond the position shown in Figure 1B.

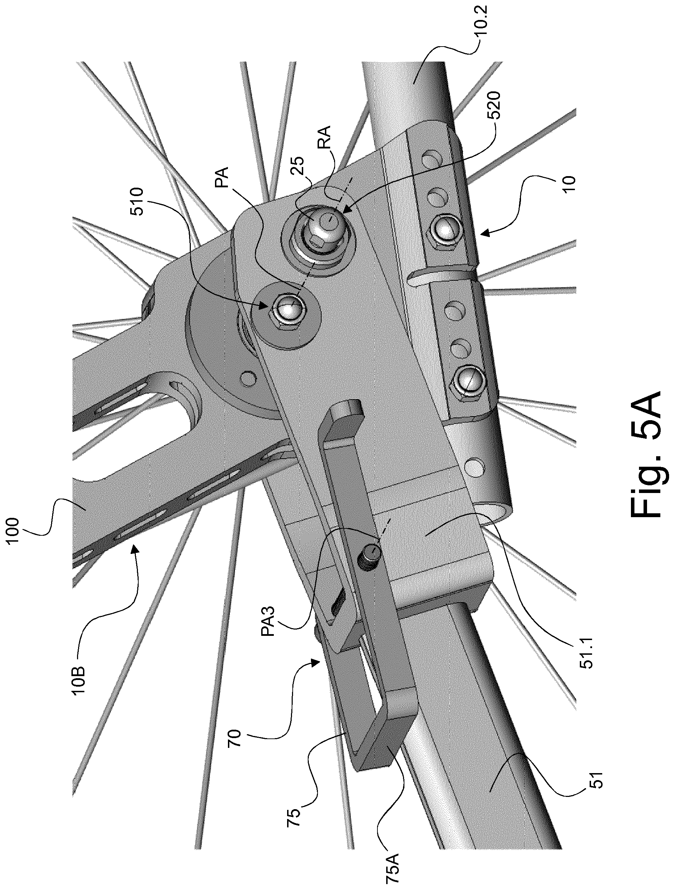

A first improvement of the wheelchair concept over the known solution disclosed US Patent No. US 7,694,990 B2 resides in the manner in which a predetermined range of pivoting movement of the pivot arm(s) of the anti-tip assembly is achieved, and will be discussed with reference to Figures 5A-C.

According to US Patent No. US 7,694,990 B2, a dedicated stop device is provided on the pivot arm or the wheelchair frame to limit the amplitude of pivoting movement of the pivot arm, which therefore necessitates the provision of additional wheelchair parts and components. According to the present invention, no such additional parts and components are required.

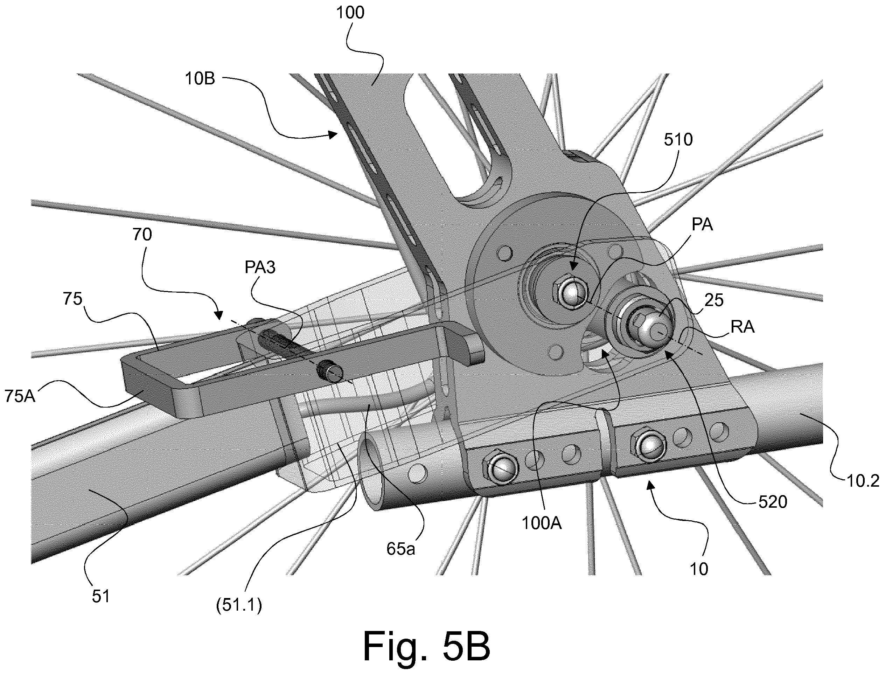

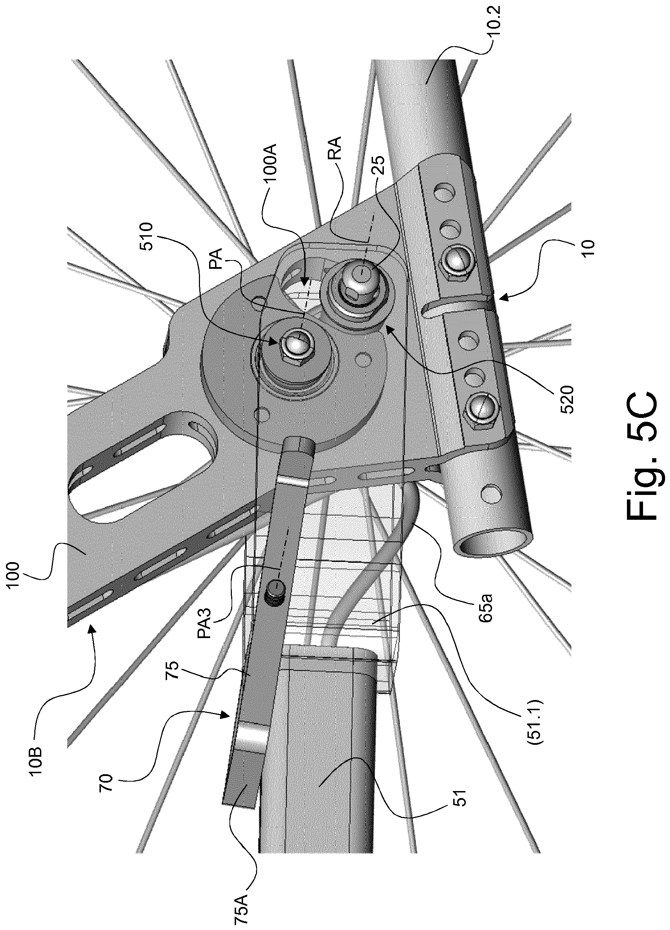

As shown in Figures 5A-C, the bracket 100 is advantageously provided with an arcuate opening 100A (see in particular Figures 5B and 5C where the front portion 51.1 of the pivot arm 51 is shown in transparency) configured to allow passage of a drive wheel axis 25 of the drive wheel 20, which drive wheel axis 25 is coupled to the pivot arm 51, via the drive wheel attachment point 520. This arcuate opening 100A defines a predetermined range of pivoting movement of the pivot arm 51 with respect to the wheelchair frame 10.

In Figures 5A and 5B, the pivot arm 51 is shown in an intermediate position relative to the bracket 100, with the drive wheel axis 25 sitting in a position where it does not come into abutment with either one of the two ends of the arcuate opening 100A. In Figure 5C, the pivot arm 51 is shown pivoted to an extreme position (corresponding to the tilted position of the wheelchair 1 shown in Figure 1B), with the drive wheel axis 25 coming in abutment with the lower end of the arcuate opening 100A.

One will thus appreciate that the arcuate opening 100A provided in the bracket 100 and the drive wheel axis 25 jointly fulfil the function of limiting the amplitude of pivoting movement of the pivot arm 51 with respect to the wheelchair frame 10.

By way of preference, the front portion 51.1 of the pivot arm 51, which is coupled to the bracket 100 and to the drive wheel 20, is configured as a fork member laterally surrounding the bracket 100. In other words, a pair of wheelchair attachment points 510 and a pair of drive wheel attachment points 520 are provided on the front portion 51.1 of the pivot arm 51, on both sides of the bracket 100, ensuring optimal mechanical stability of the coupling between the pivot arm 51, the bracket 100 and the drive wheel 20. Robust and reliable pivoting movement of the pivot arm 51 with respect to the bracket 100 is advantageously ensured by the provision of ball bearings at the pivot joint between the bracket 100 and the pivot arm 51.

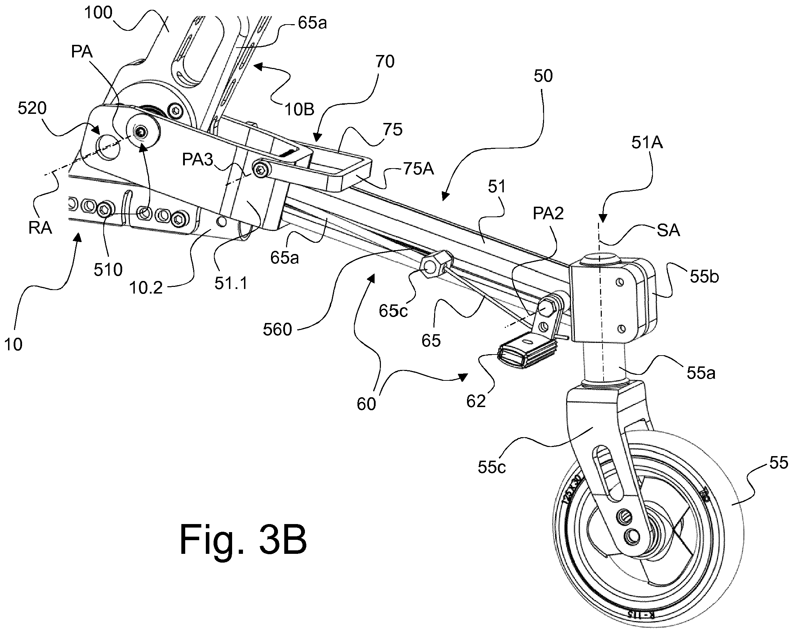

A second improvement of the wheelchair concept over the known solution disclosed US Patent No. US 7,694,990 B2 will be discussed with reference to Figures 3B to 5A-D. The second improvement resides in the provision of a tilt angle limiting device, designated by reference numeral 70, that is configured to take a first position in which the pivot arm 51 is allowed to pivot with respect to the wheelchair frame 10 over the predetermined range of pivoting movement and at least a second position in which the pivot arm 51 is not allowed to pivot with respect to the wheelchair frame 10 over the full predetermined range of pivoting movement.

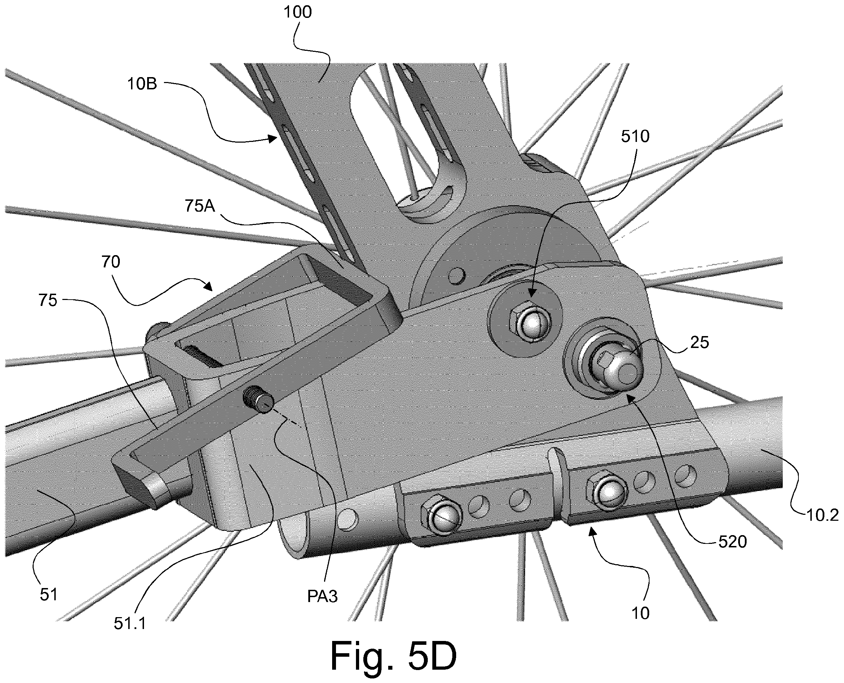

More specifically, in accordance with a particularly preferred embodiment, as illustrated, the tilt angle limiting device 70 comprises a lever 75 mounted onto the pivot arm 51 and adapted to pivot with respect to the pivot arm 51, about a pivot axis PA3, between the first and second positions. Figures 5A-C (see also Figures 1-4) show the lever 75 in a first, inactive position. In this first position, the pivot arm 51 is free to move with respect to the bracket 100 within the predetermined range of pivoting movement. Figure 5D shows the lever pivoted in a second, active position, toward a rear side of the bracket 100. In this second position, the range of pivoting movement of the pivot arm 51 is greatly restricted.

A stop element may be secured to the lever 75 in such a way as to come in abutment with a portion of the bracket 100 (or another portion of the wheelchair frame 10), when the lever 75 is moved to the second position, to prevent the pivot arm 51 from moving over the full predetermined range of pivoting movement.

A particularly simple and robust solution may consist in designing the lever 75 in such a way as to directly act as the stop element. For instance, as illustrated in Figures 3B to 5A-D, the lever 75 may exhibit a substantially U-shaped configuration, with a portion 75A that is configured to limit pivoting movement of the pivot arm 51 with respect to the wheelchair frame. Upon pivoting the lever 75 from the first position to the second position, the portion 75A is brought in close proximity to the rear end of the bracket 100, thereby substantially reducing the amplitude of pivoting movement of the pivot arm 51.

The aforementioned lever 75 constitutes a particularly simple and robust solution to limit the amplitude of pivoting movement of the pivot arm 51, and thereby the tilt angle of the wheelchair 1.

A further improvement of the wheelchair concept over the known solution disclosed US Patent No. US 7,694,990 B2 resides in the positioning of the rear wheel 55 at the distal end 51A of the pivot arm 51. Indeed, considering that the drive wheel 20 is carried at one end of the pivot arm 51 and that the rear wheel 55 is positioned at the other, distal end 51A of the pivot arm 51, the actual diameters of the drive wheel 20 and rear wheel 55, which may vary, will directly impact the orientation of the pivot arm 51 and therefore the angle formed by the swivel axis SA of the rear wheel 55 with respect to the ground surface S. It may in particular be desirable to allow mounting of rear wheels 55 of different dimensions, such as e.g. 5" or 6" wheels, which will directly impact the geometry of the anti-tip assembly 50. In order to ensure optimal drivability and avoid fluttering of the rear wheel 55, the swivel axis SA should be set to be substantially perpendicular to the ground surface S. To this end, a position of the swivel member 55a with respect to the pivot arm 51 is advantageously adjustable.

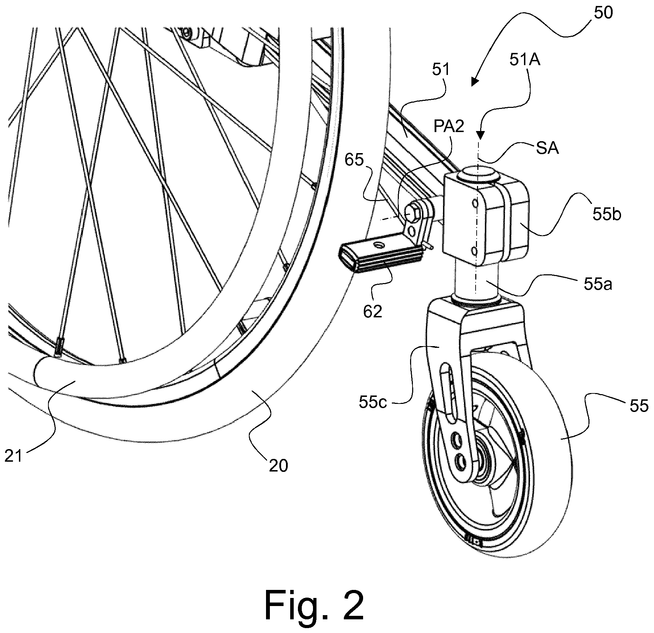

One solution may consist in positioning the rear wheel 55 at the distal end 51A of the pivot arm 51 in such a way that the swivel member 55a can be rotated with respect to the pivot arm 51 and thereby adjust the angle of the swivel member 55a. A simpler solution may however consist, as shown in Figures 2, 3B and 4, in designing the swivel member 55a so as to be repositionable with respect to the pivot arm 51 by translation along the swivel axis SA. Indeed, translation of the swivel member 55a with respect to the pivot arm 51 will cause the pivot arm 51 to be correspondingly raised or lowered at the distal end 51A and pivot about the pivot axis PA, achieving the desired adjustment of the angle of the swivel member 55a and swivel axis SA. By way of preference, the clamping element 55b is designed to be releasable so as to selectively allow the swivel member 55a to be moved along its axis SA and be repositioned at the desired location. Adjustment of the angle of the swivel axis SA of the rear wheel 55 can therefore be performed very easily.

Yet another improvement of the wheelchair concept over the known solution disclosed US Patent No. US 7,694,990 B2 will now be discussed with reference to Figures 2 to 3A-B, which illustrate the provision of a drive wheel lock assembly 60 configured to apply a wheel lock to the drive wheel 20. In contrast to the solutions disclosed in US Patent No. US 7,694,990 B2, the drive wheel lock assembly 60 comprises a wheel engaging element 62 that is mounted directly on the pivot arm 51, namely on a lateral side thereof, and that is configured to be selectively engageable with the drive wheel 20 rearward of the drive wheel 20. This configuration has the advantage that tilting of the wheelchair 1 will not have any impact on the applied wheel lock as the wheel engaging element 62 does not move relative to the drive wheel 20 during the tilting movement.

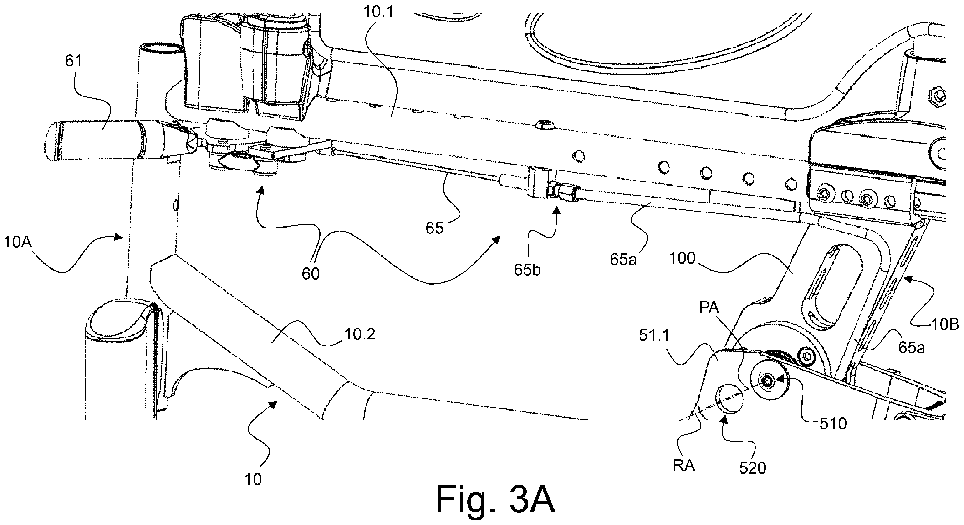

By way of preference, the drive wheel lock assembly 60 is cable-operated and comprises a user-operable handle 61, located at the front-end portion 10A of the wheelchair frame 10, coupled to the wheel engaging element 62 via a cable 65 (see Figures 1, 1A-B and 3A). As shown in Figures 1A, 3A and 3B, the cable 65 runs from the user-operable handle 61 under a portion of the upper longitudinal frame member 10.1, along the bracket 100 and pivot arm 51, to the wheel engaging element 62. The wheel engaging element 62 is preferably configured so as to pivot with respect to the pivot arm 51 upon being operated, reference sign PA2 designating a pivot axis of the wheel engaging element 62. Reference sign 65b in Figure 3A designates a cable-tension adjustment element secured to a lower side of the upper longitudinal frame element 10.1 and used to adjust tension of the cable 65, while reference sign 65c in Figure 3B designates a cable guide element secured to a lateral side of the pivot arm 51, upstream of the position of the wheel engaging element 62. Reference sign 65a designates a cable guide guiding the cable 65 along the upper longitudinal frame member 10.1, the bracket 100 and the pivot arm 51, which cable guide 65a runs from the cable-tension adjustment element 65b to the cable guide element 65c.

By way of preference, a position of the wheel engaging element 62 along the pivot arm 51 is adjustable to cope with varying drive wheel sizes. In that respect, the pivot arm 51 is preferably provided with a mounting groove 560 extending longitudinally along a lateral side of the pivot arm 51, the wheel engaging element 62 being releasably mounted in the mounting groove 560 and repositionable along the mounting groove 560. As shown in Figure 3B, the cable guide 65a may be routed through a portion of the mounting groove 560 to guide part of the cable 65 to the inner section of the front portion 51.1 of the pivot arm 51 where the pivot arm 51 is coupled to the bracket 100.

Various modifications and/or improvements may be made to the above-described embodiments without departing from the scope of the invention as defined by the appended claims. In particular, the anti-tip assembly 50 can include a pair of pivot arms 51, as discussed above, or a single pivot arm provided along a median plane of the wheelchair.

In addition, a drive lock assembly could be provided on both lateral sides of the wheelchair 1 to apply a wheel lock on each drive wheel.

### LIST OF REFERENCE NUMERALS AND SIGNS USED THEREIN

- 1: wheelchair
- 5: seat portion
- 10: wheelchair frame
- 10.1: upper longitudinal frame member
- 10.2: lower longitudinal frame member
- 10A: front-end portion of wheelchair frame 10
- 10B: rear-end portion of wheelchair frame 10
- 20: pair of drive wheels
- 21: hand rim
- 25: drive wheel axis of drive wheel 20
- 30: front wheel (pivotable caster wheel)
- 30c: fork element carrying front wheel 30
- 50: anti-tip assembly
- 51: pivot arm
- 51.1: front portion of pivot arm 51 coupled to wheelchair frame 10 and drive wheel 20
- 51A: distal end of pivot arm 51, rearward of drive wheel 20
- 55: rear wheel (pivotable caster wheel) provided at distal end 51A of pivot arm 51
- 55a: swivel member of rear wheel 55
- 55b: releasable clamping element holding swivel member 55a of rear wheel 55
- 55c: fork element carrying rear wheel 55
- 60: (cable-operated) drive wheel lock assembly configured to apply a wheel lock to drive wheel 20
- 61: user-operable handle
- 62: wheel engaging element
- 65: cable connecting user-operable handle 61 to wheel engaging element 62
- 65a: cable guide
- 65b: cable-tension adjustment element
- 65c: cable guide element
- 70: tilt angle limiting device
- 75: pivotable lever of tilt angle limiting device 70 / pivotable between an inactive position (Figures 1-5A-C) and an active position (Figure 5D)
- 75A: portion of pivotable lever 75 configured to limit pivoting movement of pivot arm 51 with respect to wheelchair frame 10 when pivotable lever 75 is pivoted to an active position (Figure 5D)
- 100: (rear) bracket of wheelchair frame 10 supporting anti-tip assembly 50
- 100A: arcuate opening formed in bracket 100
- 510: wheelchair frame attachment point (coincides with pivot axis PA of pivot arm 51)
- 520: drive wheel attachment point (coincide with axis of rotation RA of drive wheel 20)
- 560: mounting groove extending longitudinally along a lateral side of pivot arm 51 for releasable mounting of wheel engaging element 62
- S: ground surface
- PA: pivot axis of pivot arm 51
- PA2: pivot axis of wheel engaging element 62
- PA3: pivot axis of pivotable lever 75
- RA: axis of rotation of drive wheel 20
- SA: swivel axis of swivel member 55a

## Claims

1. A wheelchair (1) comprising :
- a wheelchair frame (10);
- a pair of drive wheels (20) configured to contact a ground surface (S) when the wheelchair (1) is in use, each drive wheel (20) rotating about an axis of rotation (RA);
- at least one front wheel (30) mounted to a front-end portion (10A) of the wheelchair frame (10); and
- an anti-tip assembly (50) mounted to a rear-end portion (10B) of the wheelchair frame (10), which anti-tip assembly (50) includes at least one pivot arm (51) that is supported onto the rear-end portion (10B) of the wheelchair frame (10) so as to be pivotable with respect to the wheelchair frame (10) about a pivot axis (PA),
wherein the pivot arm (51) includes a drive wheel attachment point (520) configured to provide attachment of at least one of the drive wheels (20), which drive wheel attachment point (520) coincides with the axis of rotation (RA) of the drive wheel (20), and a wheelchair frame attachment point (510) configured to provide attachment of the pivot arm (51) to the rear-end portion (10B) of the wheelchair frame (10), which wheelchair frame attachment point (510) coincides with the pivot axis (PA) of the pivot arm (51),
wherein the anti-tip assembly (50) further comprises a rear wheel (55) that is provided at a distal end (51A) of the pivot arm (51), rearward of the drive wheels (20), which rear wheel (55) is configured to contact the ground surface (S) when the wheelchair (1) is in use,
wherein the anti-tip assembly (50) is configured to allow the wheelchair frame (10) to tilt backwards into a predetermined stable titled position with the at least one front wheel (30) in a raised position above the ground surface (S), while the drive wheels (20) and the rear wheel (55) remain in contact with the ground surface (S),
**characterized in that** the pivot arm (51) is attached, via the wheelchair frame attachment point (510), to a bracket (100) of the wheelchair frame (10), which bracket (100) is provided with an arcuate opening (100A) configured to allow passage of a drive wheel axis (25) of the drive wheel (20), which drive wheel axis (25) is coupled to the pivot arm (51), via the drive wheel attachment point (520), the arcuate opening (100A) defining a predetermined range of pivoting movement of the pivot arm (51) with respect to the wheelchair frame (10).

2. The wheelchair (1) according to claim 1, wherein a front portion (51.1) of the pivot arm (51), which is coupled to the bracket (100) and to the drive wheel (20), is configured as a fork member laterally surrounding the bracket (100).

3. The wheelchair (1) according to claim 1 or 2, wherein the anti-tip assembly (50) further comprises a tilt angle limiting device (70) that is configured to take a first position in which the pivot arm (51) is allowed to pivot with respect to the wheelchair frame (10) over the predetermined range of pivoting movement and at least a second position in which the pivot arm (51) is not allowed to pivot with respect to the wheelchair frame (10) over the full predetermined range of pivoting movement.

4. A wheelchair (1) comprising :
- a wheelchair frame (10);
- a pair of drive wheels (20) configured to contact a ground surface (S) when the wheelchair (1) is in use, each drive wheel (20) rotating about an axis of rotation (RA);
- at least one front wheel (30) mounted to a front-end portion (10A) of the wheelchair frame (10); and
- an anti-tip assembly (50) mounted to a rear-end portion (10B) of the wheelchair frame (10), which anti-tip assembly (50) includes at least one pivot arm (51) that is supported onto the rear-end portion (10B) of the wheelchair frame (10) so as to be pivotable with respect to the wheelchair frame (10) about a pivot axis (PA),
wherein the pivot arm (51) includes a drive wheel attachment point (520) configured to provide attachment of at least one of the drive wheels (20), which drive wheel attachment point (520) coincides with the axis of rotation (RA) of the drive wheel (20), and a wheelchair frame attachment point (510) configured to provide attachment of the pivot arm (51) to the rear-end portion (10B) of the wheelchair frame (10), which wheelchair frame attachment point (510) coincides with the pivot axis (PA) of the pivot arm (51),
wherein the anti-tip assembly (50) further comprises a rear wheel (55) that is provided at a distal end (51A) of the pivot arm (51), rearward of the drive wheels (20), which rear wheel (55) is configured to contact the ground surface (S) when the wheelchair (1) is in use,
wherein the anti-tip assembly (50) is configured to allow the wheelchair frame (10) to tilt backwards into a predetermined stable titled position with the at least one front wheel (30) in a raised position above the ground surface (S), while the drive wheels (20) and the rear wheel (55) remain in contact with the ground surface (S),
**characterized in that** the anti-tip assembly (50) further comprises a tilt angle limiting device (70) that is configured to take a first position in which the pivot arm (51) is allowed to pivot with respect to the wheelchair frame (10) over a predetermined range of pivoting movement and at least a second position in which the pivot arm (51) is not allowed to pivot with respect to the wheelchair frame (10) over the full predetermined range of pivoting movement.

5. The wheelchair (1) according to claim 3 or 4, wherein the tilt angle limiting device (70) comprises a lever (75) mounted onto the pivot arm (51) and adapted to pivot with respect to the pivot arm (51) between the first and second positions.

6. The wheelchair (1) according to claim 5, wherein the lever (75) comprises a portion (75A) configured to limit pivoting movement of the pivot arm (51) with respect to the wheelchair frame (10) when the lever (75) is pivoted to the second position.

7. The wheelchair (1) according to any one of the preceding claims, wherein a position of a swivel member (55a) of the rear wheel (55) with respect to the pivot arm (51) is adjustable so that a swivel axis (SA) of the swivel member (55a) can be adjusted to be substantially perpendicular to the ground surface (S).

8. A wheelchair (1) comprising :
- a wheelchair frame (10);
- a pair of drive wheels (20) configured to contact a ground surface (S) when the wheelchair (1) is in use, each drive wheel (20) rotating about an axis of rotation (RA);
- at least one front wheel (30) mounted to a front-end portion (10A) of the wheelchair frame (10); and
- an anti-tip assembly (50) mounted to a rear-end portion (10B) of the wheelchair frame (10), which anti-tip assembly (50) includes at least one pivot arm (51) that is supported onto the rear-end portion (10B) of the wheelchair frame (10) so as to be pivotable with respect to the wheelchair frame (10) about a pivot axis (PA),
wherein the pivot arm (51) includes a drive wheel attachment point (520) configured to provide attachment of at least one of the drive wheels (20), which drive wheel attachment point (520) coincides with the axis of rotation (RA) of the drive wheel (20), and a wheelchair frame attachment point (510) configured to provide attachment of the pivot arm (51) to the rear-end portion (10B) of the wheelchair frame (10), which wheelchair frame attachment point (510) coincides with the pivot axis (PA) of the pivot arm (51),
wherein the anti-tip assembly (50) further comprises a rear wheel (55) that is provided at a distal end (51A) of the pivot arm (51), rearward of the drive wheels (20), which rear wheel (55) is configured to contact the ground surface (S) when the wheelchair (1) is in use,
wherein the anti-tip assembly (50) is configured to allow the wheelchair frame (10) to tilt backwards into a predetermined stable titled position with the at least one front wheel (30) in a raised position above the ground surface (S), while the drive wheels (20) and the rear wheel (55) remain in contact with the ground surface (S),
**characterized in that** a position of a swivel member (55a) of the rear wheel (55) with respect to the pivot arm (51) is adjustable so that a swivel axis (SA) of the swivel member (55a) can be adjusted to be substantially perpendicular to the ground surface (S).

9. The wheelchair (1) according to claim 7 or 8, wherein the swivel member (55a) is repositionable with respect to the pivot arm (51) by translation along the swivel axis (SA).

10. The wheelchair (1) according to claim 9, wherein the swivel member (55a) is held onto the pivot arm (51) by means of a releasable clamping element (55b).

11. The wheelchair (1) according to any one of the preceding claims, wherein the anti-tip assembly (50) further comprises at least one drive wheel lock assembly (60) configured to apply a wheel lock to at least one of the drive wheels (20),
and wherein the drive wheel lock assembly (60) comprises a wheel engaging element (62) mounted on the pivot arm (51) and configured to be selectively engageable with the drive wheel (20) rearward of the drive wheel (20).

12. A wheelchair (1) comprising :
- a wheelchair frame (10);
- a pair of drive wheels (20) configured to contact a ground surface (S) when the wheelchair (1) is in use, each drive wheel (20) rotating about an axis of rotation (RA);
- at least one front wheel (30) mounted to a front-end portion (10A) of the wheelchair frame (10); and
- an anti-tip assembly (50) mounted to a rear-end portion (10B) of the wheelchair frame (10), which anti-tip assembly (50) includes at least one pivot arm (51) that is supported onto the rear-end portion (10B) of the wheelchair frame (10) so as to be pivotable with respect to the wheelchair frame (10) about a pivot axis (PA),
wherein the pivot arm (51) includes a drive wheel attachment point (520) configured to provide attachment of at least one of the drive wheels (20), which drive wheel attachment point (520) coincides with the axis of rotation (RA) of the drive wheel (20), and a wheelchair frame attachment point (510) configured to provide attachment of the pivot arm (51) to the rear-end portion (10B) of the wheelchair frame (10), which wheelchair frame attachment point (510) coincides with the pivot axis (PA) of the pivot arm (51),
wherein the anti-tip assembly (50) further comprises a rear wheel (55) that is provided at a distal end (51A) the pivot arm (51), rearward of the drive wheels (20), which rear wheel (55) is configured to contact the ground surface (S) when the wheelchair (1) is in use,
wherein the anti-tip assembly (50) is configured to allow the wheelchair frame (10) to tilt backwards into a predetermined stable titled position with the at least one front wheel (30) in a raised position above the ground surface (S), while the drive wheels (20) and the rear wheel (55) remain in contact with the ground surface (S),
wherein the anti-tip assembly (50) further comprises at least one drive wheel lock assembly (60) configured to apply a wheel lock to at least one of the drive wheels (20),
**characterized in that** the drive wheel lock assembly (60) comprises a wheel engaging element (62) mounted on the pivot arm (51) and configured to be selectively engageable with the drive wheel (20) rearward of the drive wheel (20).

13. The wheelchair (1) according to claim 11 or 12, wherein the drive wheel lock assembly (60) is a cable-operated drive wheel lock assembly comprising a user-operable handle (61) coupled to the wheel engaging element (62) via a cable (65),
and wherein the wheel engaging element (62) is preferably configured to pivot with respect to the pivot arm (51) upon being operated.

14. The wheelchair (1) according to claim 13, wherein a position of the wheel engaging element (62) along the pivot arm (51) is adjustable.

15. The wheelchair (1) according to claim 14, wherein the pivot arm (51) is provided with a mounting groove (560) extending longitudinally along a lateral side of the pivot arm (51), the wheel engaging element (62) being releasably mounted in the mounting groove (560) and repositionable along the mounting groove (560),
and wherein part of the cable (65) is preferably guided inside a portion of the mounting groove (560).
